# FASCICULE DE BREVET EUROPEEN

(11) **EP 3 987 591 B1**
(45) Date de publication et mention de la délivrance du brevet: **04.10.2023**
(21) Numéro de dépôt: 20731116.8
(22) Date de dépôt: 11.06.2020
(51) Int. Cl.: H01M 50/503, H01R 4/48, H01M 50/204

(54) **MOYEN DE CONNEXION ENTRE DEUX PARTIES D'UNE BARRE OMNIBUS**
VERBINDUNGSMITTEL ZWISCHEN ZWEI TEILEN EINER SAMMELSCHIENE
CONNECTING MEANS BETWEEN TWO PARTS OF A BUS BAR

(30) Priorité: 20.06.2019 FR 1906668
(43) Date de publication de la demande: 27.04.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: MATHIEU, Alexandre, 76000 ROUEN (FR)
(74) Mandataire: Renault Group
(86) Numéro de dépôt international: PCT/EP2020/066180
(87) Numéro de publication internationale: WO 2020/254178

(56) Documents cités:
- EP-B1- 2 697 846
- WO-A1-2018/155249

## Description

L'invention concerne un moyen de connexion pour assurer la jonction entre une première partie d'une barre omnibus et une deuxième partie d'une telle barre omnibus de conduction électrique entre modules d'une batterie. L'invention porte encore sur une barre omnibus comprenant un tel moyen de connexion. L'invention porte encore sur une batterie comprenant une telle barre omnibus. L'invention porte encore sur un véhicule automobile comprenant une telle batterie et/ou une telle barre omnibus. L'invention porte encore sur un procédé d'assemblage d'une telle barre omnibus.

Un véhicule automobile, en particulier hybride ou électrique, comprend généralement une batterie comprenant différents modules. Le volume de chaque module est généralement maximal eu égard à l'espace disponible pour le loger, généralement au niveau du plancher, afin de maximiser les capacités de stockage d'énergie de chaque module. Il en résulte ainsi un espace restreint entre les modules. Or deux modules adjacents sont généralement connectés entre eux par une barre omnibus ou « busbar » en anglais qui assure la conduction électrique entre ces deux modules. Ainsi, le manque d'espace entre deux modules rend complexe l'implantation de la barre omnibus entre eux.

Le brevet US 8 802 259 B2 décrit un pack batterie particulièrement compact pour véhicule électrique. Il comporte des modules empilés verticalement et interconnectés par des busbars plats. Chacun des busbars forme une structure complexe puisqu'il est spécialement conçu par rapport à l'agencement des modules dans une zone du pack. Ainsi, ces busbars ne peuvent être réutilisés si l'on change l'agencement des modules. De plus, ils imposent des contraintes strictes d'assemblage, car il faut pouvoir poser chaque busbar en une seule opération, ce qui est difficile compte-tenu de la complexité de chaque busbar.

Le but de l'invention est de fournir un moyen de connexion d'une barre omnibus remédiant aux inconvénients ci-dessus. En particulier, l'invention propose un moyen de connexion simple, fiable et durable pour implanter une barre omnibus au sein d'un espace exigu entre modules.

Pour atteindre cet objectif, l'invention porte sur un moyen de connexion destiné à assurer la jonction électrique entre une première partie d'une barre omnibus de conduction électrique et une deuxième partie de ladite barre omnibus, le moyen de connexion comprenant :
- une partie mâle destinée à être solidarisée à la première partie de la barre omnibus, et
- une partie femelle destinée à être solidarisée à la deuxième partie de la barre omnibus,
la partie mâle et la partie femelle étant aptes à s'emboîter l'une dans l'autre respectivement en suivant :
- un premier mouvement de translation de la partie femelle relativement à la partie mâle le long d'un premier axe, suivi de ;
- un deuxième mouvement de rotation de la partie femelle relativement à la partie mâle autour d'un deuxième axe perpendiculaire au premier axe, notamment une rotation d'un quart de tour ou sensiblement d'un quart de tour.

La partie mâle peut comprendre un premier élément de conduction électrique, notamment en forme de plaque rectangulaire ou sensiblement rectangulaire, la partie femelle pouvant comprendre un deuxième élément de conduction électrique apte à venir progressivement au contact du premier élément de conduction tout au long des premier et deuxième mouvements, notamment un deuxième élément de conduction électrique en forme de chape dotée de deux ailes parallèles ou sensiblement parallèles, aptes à venir progressivement au contact de deux faces opposées de la plaque tout au long des premier et deuxième mouvements.

A l'issue des premier et deuxième mouvements, les deux faces opposées de la plaque peuvent avoir chacune une aire de contact au moins égale à quatre fois une aire de section droite d'une première partie ou d'une deuxième partie d'une telle barre omnibus, et les deux ailes de la chape peuvent avoir chacune une aire de contact en contact avec l'une des deux faces opposées de la plaque, l'aire de contact pouvant être au moins égale à quatre fois l'aire de section droite d'une première partie ou d'une deuxième partie d'une telle barre omnibus.

La partie mâle peut comprendre un premier élément d'immobilisation de la partie femelle, notamment un cran, et la partie femelle peut comprendre un deuxième élément d'immobilisation apte à coopérer avec le premier élément d'immobilisation, notamment un deuxième élément d'immobilisation de type pion, le pion pouvant venir se bloquer au sein du cran à l'issue des premier et deuxième mouvements.

La partie mâle peut comprendre un élément d'insertion du deuxième élément d'immobilisation de la partie femelle, notamment une encoche débouchant au niveau du cran.

La partie mâle peut comprendre un moyen de fin de course en rotation, notamment une butée, venant au contact de la partie femelle à l'issue des premier et deuxième mouvements.

L'invention porte encore sur une barre omnibus de conduction électrique entre modules d'une batterie, notamment d'une batterie d'un véhicule automobile hybride ou électrique, la barre omnibus comprenant :
- une première partie, et
- une deuxième partie, et
- un moyen de connexion entre la première et la deuxième parties tel que défini précédemment.

L'invention porte encore sur une batterie, notamment de véhicule automobile hybride ou électrique, la batterie comprenant au moins une barre omnibus telle que définie précédemment.

L'invention porte encore sur un véhicule automobile hybride ou électrique, comprenant une batterie telle que définie précédemment et/ou au moins une barre omnibus telle que définie précédemment.

L'invention porte encore sur un procédé d'assemblage d'une barre omnibus telle que définie précédemment, notamment pour connecter électriquement deux modules d'une batterie entre eux, le procédé comprenant une étape de fourniture de :
- une première partie d'une barre omnibus comprenant une partie mâle,
- une deuxième partie d'une barre omnibus comprenant une partie femelle, suivie d'une étape d'engagement de la partie mâle dans la partie femelle en suivant un premier mouvement de translation de la partie femelle relativement à la partie mâle dans un plan principal contenant l'axe longitudinal principal de la barre omnibus en position finale connectée, suivie d'une étape de blocage de la partie femelle avec la partie mâle en suivant un deuxième mouvement de rotation de la partie femelle par rapport à la partie mâle autour ou sensiblement autour d'un deuxième axe perpendiculaire au plan principal, notamment une rotation d'un quart de tour ou sensiblement d'un quart de tour.

L'étape d'engagement peut comprendre une phase d'insertion au cours de laquelle un deuxième élément d'immobilisation de la partie femelle, notamment un pion, s'insère au sein d'un élément d'insertion de la partie mâle, notamment une encoche.

L'étape de blocage peut comprendre une fin de course en rotation de la partie femelle contre un moyen de fin de course ménagé sur la partie mâle, notamment une butée, de sorte à ce qu'un deuxième élément d'immobilisation de la partie femelle soit repoussé au sein d'un premier élément d'immobilisation de la partie mâle, notamment un cran.

Ces objets, caractéristiques et avantages de la présente invention seront exposés en détail dans la description suivante d'un mode de réalisation d'un véhicule automobile, faite à titre non-limitatif en relation avec les figures jointes parmi lesquelles :
[Fig. 1] La figure 1 est une vue schématique d'un véhicule automobile selon un mode de réalisation de l'invention.
[Fig. 2] La figure 2 est une vue en perspective d'une batterie du véhicule automobile selon un mode de réalisation de l'invention.
[Fig. 3] La figure 3 est une vue de détail en perspective de la batterie selon le mode de réalisation de l'invention.
[Fig. 4] La figure 4 est une vue en perspective partielle de la batterie selon le mode de réalisation de l'invention.
[Fig. 5] La figure 5 est une vue en perspective d'une partie femelle d'un moyen de connexion d'une barre omnibus selon un mode de réalisation de l'invention.
[Fig. 6] La figure 6 est une autre vue en perspective de la partie femelle du moyen de connexion selon le mode de réalisation de l'invention.
[Fig. 7] La figure 7 est une vue de détail en perspective au cours du procédé d'assemblage de la barre omnibus entre deux modules de la batterie selon le mode de réalisation de l'invention.
[Fig. 8] La figure 8 est une autre vue de détail en perspective au cours du procédé d'assemblage de la barre omnibus entre deux modules de la batterie selon le mode de réalisation de l'invention.
[Fig. 9] La figure 9 est une autre vue de détail en perspective au cours du procédé d'assemblage de la barre omnibus entre deux modules de la batterie selon le mode de réalisation de l'invention.
[Fig. 10] La figure 10 est une autre vue de détail en perspective au cours du procédé d'assemblage de la barre omnibus entre deux modules de la batterie selon le mode de réalisation de l'invention, la partie femelle étant représentée en transparence.
[Fig. 11] La figure 11 est une autre vue de détail en perspective au cours du procédé d'assemblage de la barre omnibus entre deux modules de la batterie selon le mode de réalisation de l'invention, la deuxième partie étant représentée en transparence.
[Fig. 12] La figure 12 est une vue en perspective de la barre omnibus en position finale de connexion selon le mode de réalisation de l'invention.
[Fig. 13] La figure 13 est une autre vue de détail en perspective de la barre omnibus en position finale de connexion selon le mode de réalisation de l'invention, la deuxième partie étant représentée en transparence.

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens «avant» correspond au sens dans lequel le véhicule automobile se déplace habituellement dans la direction longitudinale et est opposé au sens «arrière».

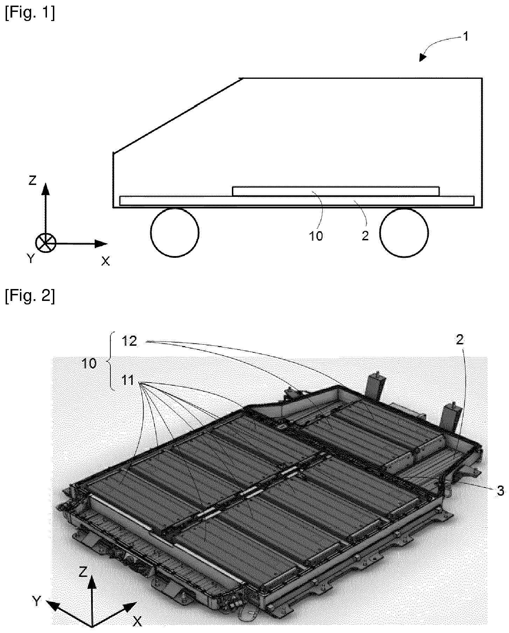

Un exemple de véhicule automobile 1 selon un mode de réalisation de l'invention, est illustré schématiquement sur la figure 1. Le véhicule automobile 1 est par exemple un véhicule électrique ou un véhicule hybride connu sous l'abréviation anglo-saxonne HEV pour « Hybrid Electric Vehicle » ou encore un véhicule hybride rechargeable par branchement connu sous l'abréviation anglo-saxonne PHEV pour « Plug-in Hybrid Electric Vehicle ». Le véhicule automobile 1 comprend de préférence une caisse 2 ou carter. Le véhicule automobile 1 comprend une batterie 10, par exemple fixée sur la caisse 2. La batterie 10 comprend au moins deux modules.

Par exemple, comme illustré sur la figure 2, la batterie 10 comprend des modules avant 11 et des modules arrière 12. Par exemple, la batterie 10 comprend huit modules avant 11 et deux modules arrière 12. Par exemple les modules arrière 12 sont séparés des modules avant 11 par le biais d'une séparation 3 ou cloison.

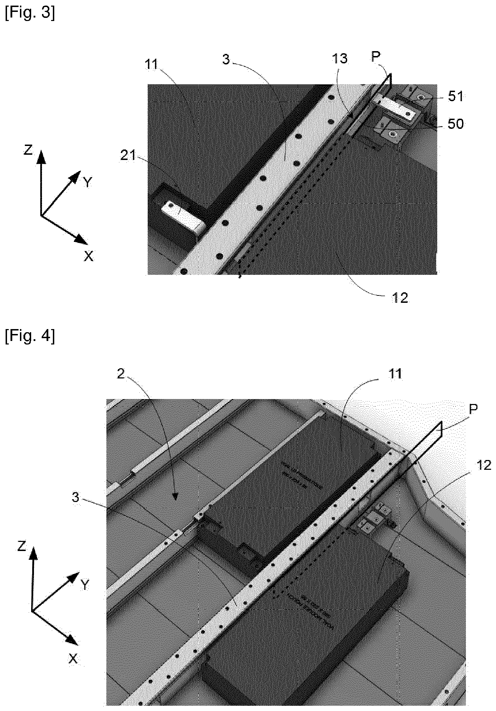

Comme illustré sur la figure 3, la batterie 10 comprend encore une barre omnibus 13 ou barre conductrice de courant ou barre de puissance ou barre de distribution, ou encore « busbar » ou « bus bar » en anglais. Cette barre 13 est ici destinée à connecter électriquement un module avant 11 et un module arrière 12. La barre omnibus 13 de conduction électrique entre modules comprend une première partie 20 et une deuxième partie 50.

De préférence, la première partie 20 comprend une partie 21 destinée à la connexion électrique et/ou à la fixation de la première partie 20 sur le module avant 11. De préférence, la deuxième partie 50 comprend une partie 51 destinée à la connexion électrique et/ou à la fixation de la deuxième partie 50 sur le module arrière 12.

De préférence, la deuxième partie 50 de la barre omnibus 13 s'étend principalement dans un plan principal P, ou sensiblement dans un plan principal P, notamment en position finale assemblée de la barre 13. Par exemple, la partie 51 s'étend perpendiculairement à la deuxième partie 50. Par exemple, le plan principal P s'étend verticalement, ou sensiblement verticalement, et transversalement, ou sensiblement transversalement, comme illustré sur les figures 3 et 4.

La barre 13 comprend encore un moyen de connexion 40 ou de fixation ou d'assemblage permettant de connecter et/ou fixer la première partie 20 à la deuxième partie 50. En outre, le moyen de connexion 40 permet la conduction électrique de la première partie 20 vers la deuxième partie 50 et vice versa le cas échéant.

Ainsi, le moyen de connexion 40 assure la jonction entre la première partie 20 de la barre omnibus 13 et la deuxième partie 50 de la barre omnibus 13. Plus précisément, le moyen de connexion 40 comprend une partie mâle 30 solidarisée à la première partie 20 et une partie femelle 60 solidarisée à la deuxième partie 50.

Par « solidarisé », on entend que la partie mâle 30 est fixée à la première partie 20, voire, de préférence, que la partie mâle 30 s'étend depuis la première partie 20. Avantageusement, la partie mâle 30 et la première partie 20 ne forment qu'une seule pièce. Ainsi, on entend que la partie femelle 60 est fixée à la deuxième partie 50, voire, de préférence, que la partie femelle 60 s'étend depuis la deuxième partie 50. Avantageusement, la partie femelle 60 et la deuxième partie 50 ne forment qu'une seule pièce.

La partie mâle 30 et la partie femelle 60 coopèrent l'une avec l'autre de sorte à assurer à la fois la fixation de la partie mâle avec la partie femelle et la conduction électrique entre la partie mâle et la partie femelle et vice versa.

De préférence, la première partie 20, en particulier la partie mâle 30 de la première partie 20, s'étend également dans le plan principal P, ou sensiblement dans le plan principal P, notamment avant l'insertion de la partie femelle 60 qui est expliquée par la suite.

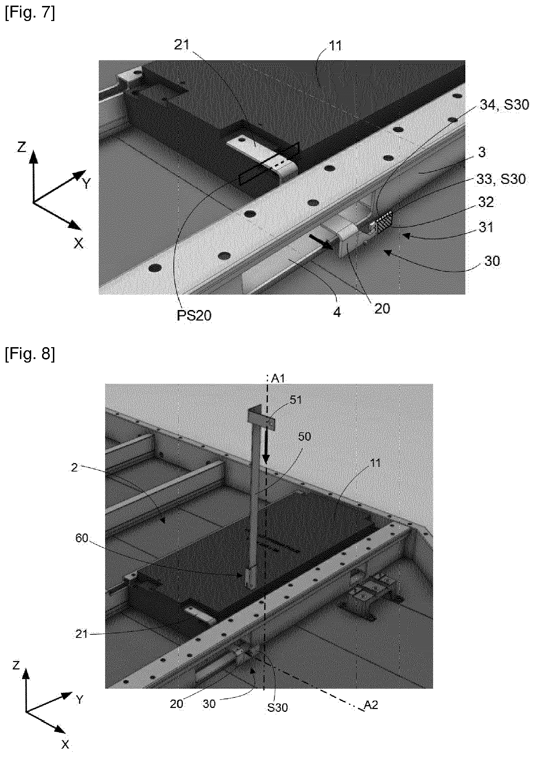

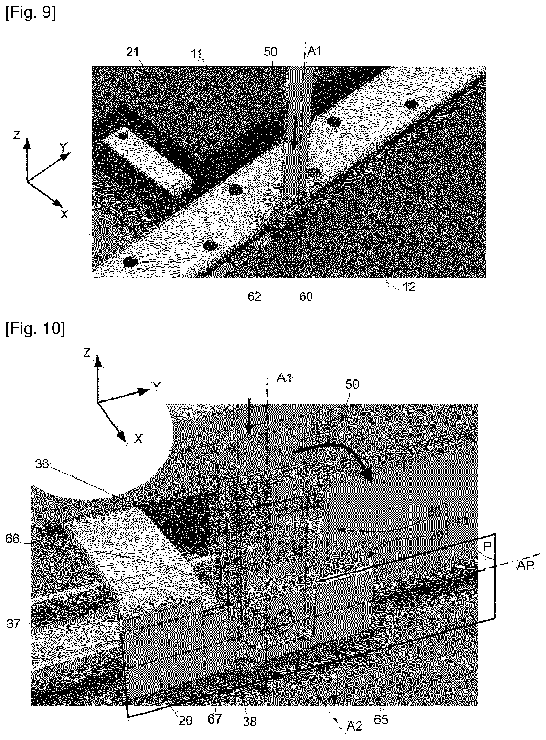

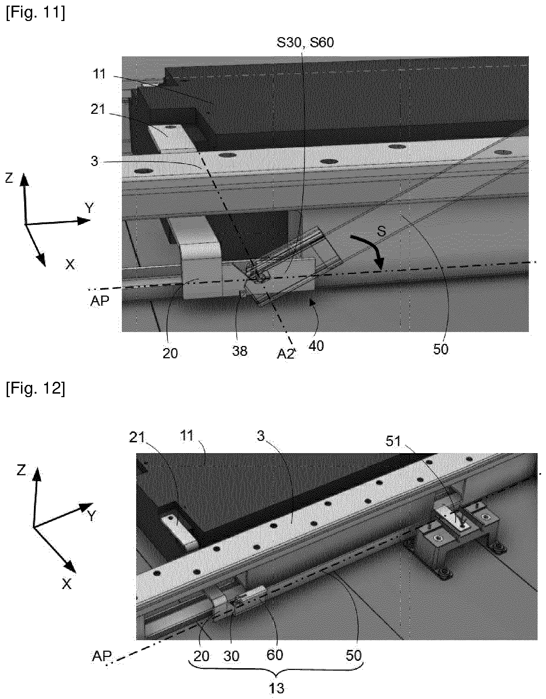

La fixation de la partie mâle avec la partie femelle est réalisée en deux temps. Comme illustré sur les figures 8, 9 et 10 avec une flèche droite et épaisse, le premier temps comprend un mouvement de translation. Cette translation relative de la partie femelle 60 par rapport à la partie mâle 30, de préférence de haut en bas, est assurée selon un premier axe A1, par exemple vertical ou sensiblement vertical. Le premier axe A1 est parallèle au plan principal P, voire compris, ou sensiblement compris, dans le plan principal P. Pour poursuivre cette fixation et assurer un maintien optimal, comme illustré sur les figures 10 et 11, le deuxième temps comprend une rotation de la partie femelle 60 par rapport à la partie mâle 30 autour d'un deuxième axe A2 perpendiculaire au premier axe A1 est réalisée. Le deuxième axe A2 est perpendiculaire, ou sensiblement perpendiculaire, au plan principal P. De préférence, le deuxième mouvement, de rotation cette fois, est assuré sur un angle de l'ordre de 90 degrés, autrement dit sur un quart de tour ou sensiblement un quart de tour. Comme évoqué précédemment et illustré en particulier sur les figures 11, 12 et 13, un axe longitudinal principal AP de la barre omnibus 13 en position finale connectée est compris, ou sensiblement compris, dans le plan principal P.

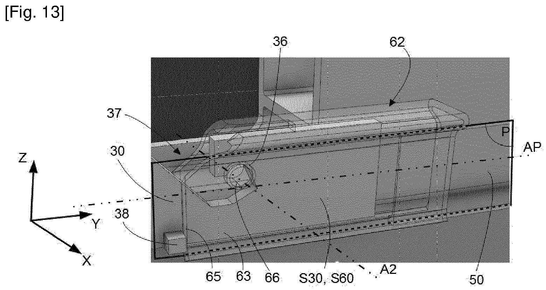

La conduction électrique entre la première partie 20 et la deuxième partie 50 est assurée par la partie mâle et la partie femelle. Pour ce faire, la partie mâle 30 comprend un premier élément de conduction électrique 31 et la partie femelle 60 comprend un deuxième élément de conduction électrique 61. Le premier élément de conduction électrique 31 coopère avec le deuxième élément de conduction électrique 61 de sorte à conduire le courant électrique de la partie mâle à la partie femelle et vice versa le cas échéant. En effet, le deuxième élément de conduction électrique 61 est apte à être au contact du premier élément de conduction 31, en particulier une fois que la barre 13 est en position finale connectée, c'est-à-dire après la rotation autour du deuxième axe A2, comme illustré en particulier sur les figures 12 et 13.

Avantageusement, comme illustré sur la figure 7 en hachures, le premier élément de conduction électrique a une forme de plaque 32, de préférence parallélépipédique. De préférence, les deux plus grandes faces opposées 33, 34 de la plaque 32 ont chacune une aire de surface de contact S30. Cette aire de contact S30 est de préférence au moins égale à quatre fois une aire de section droite de la première partie 20. Cette aire de section droite est obtenue suivant un plan PS20 perpendiculaire à la dimension selon laquelle la partie 21 s'étend principalement, comme illustré sur la figure 7.

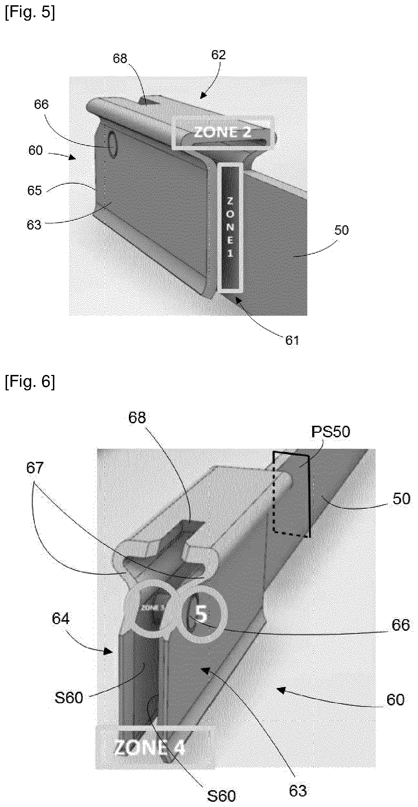

Avantageusement, comme illustré sur les figures 5 et 6, le deuxième élément de conduction électrique 61 a une forme de chape 62 dotée de deux ailes 63, 64 parallèles ou sensiblement parallèles. Ainsi, les aires internes des ailes 63, 64 viennent au contact des deux faces opposées 33, 34 de la plaque 32 dès que la partie femelle est insérée sur la partie mâle. Autrement dit, les deux ailes de la chape pincent la plaque. Ainsi, dans la position finale de connexion de la barre 13, les deux ailes 63, 64 de la chape 62 ont chacune une aire de surface de contact S60 en contact avec une aire de contact S30 de chaque face opposée 33, 34 de la plaque 32. L'aire de contact S60 est de préférence au moins égale à quatre fois l'aire de section droite de la deuxième partie 50. Cette aire de section droite est obtenue suivant un plan PS50 perpendiculaire à la dimension selon laquelle la deuxième partie 50 s'étend principalement, comme illustré sur la figure 6.

En position finale connectée de la deuxième partie 50 avec la première partie 20, les ailes 63, 64 de la chape 62 s'étendent, ou s'étendent sensiblement, parallèlement au plan principal P, les aires de contact S30, S60 étant en contact.

De préférence, l'aire de section droite de la première partie 20 est égale, ou sensiblement égale, à l'aire de section droite de la deuxième partie 50. De préférence encore, la forme de la section droite de la première partie est identique, ou sensiblement identique, à la forme de la section droite de la deuxième partie. Par exemple, les première et deuxième parties 20, 50 ont des sections droites rectangulaires. En effet, les première et deuxième parties 20, 50 sont de préférence des « plats métalliques » autrement dit des bandes plates métalliques dont l'épaisseur est largement inférieure à la largeur et à la longueur.

Comme illustré en particulier sur les figures 10 et 13, la partie mâle 30 du moyen de connexion 40 comprend un premier élément d'immobilisation 36 de la partie femelle 60. Ce premier élément d'immobilisation est de préférence un cran ou une gorge. La partie femelle 60 comprend alors un deuxième élément d'immobilisation 66 apte à coopérer avec le premier élément d'immobilisation 36. Ce deuxième élément d'immobilisation est de préférence un pion apte à venir se bloquer au sein du cran. En effet, le diamètre du pion 66 est par exemple inférieur, ou tout juste inférieur, au diamètre de l'orifice généré par le cran 36. Avantageusement, comme illustré sur les figures 10 et 13, la partie mâle 30 comprend encore un élément d'insertion 37 du pion 66 de la partie femelle 60. De préférence, cet élément d'insertion est une encoche débouchant au niveau du cran ou dans le cran. De préférence encore, la partie mâle 30 comprend un moyen de fin de course en rotation 38, par exemple une butée, ménagée du côté de la face 33 de la plaque 32. Comme illustré sur la figure 13, cette butée 38 vient alors au contact de la partie femelle 60 lorsque la deuxième partie 50 s'étend suivant l'axe longitudinal principal AP de la barre omnibus 13 en position finale connectée. Par exemple, le contact entre la butée 38 de la partie mâle 30 et la partie femelle 60 se fait au niveau d'un bord 65 de l'aile 63 de la chape 62.

Alternativement ou en complément, une butée peut être ménagée du côté de la face 34 de la plaque 32 de sorte à venir au contact d'un bord de l'aile 64 de la chape 62. Alternativement, une seule butée est ménagée du côté de la face 34 de la plaque 32 de sorte à venir au contact d'un bord de l'aile 64 de la chape 62.

Préalablement au procédé d'assemblage de la barre omnibus 13 qui va être décrit par la suite, les modules avant 11 et arrière 12 sont montés dans ou sur la caisse 2 ou le carter destiné à les recevoir.

Un mode d'exécution d'un procédé d'assemblage de la barre omnibus 13 de manière à ce qu'elle s'étende entre deux modules de batterie est décrit ci-après.

Le procédé comprend d'abord une étape de fourniture de la première partie 20 de la barre omnibus 13, la première partie 20 comprenant la partie mâle 30 et de fourniture de la deuxième partie 50 de la barre omnibus 13, la deuxième partie 50 comprenant la partie femelle 60.

A noter que, dans un but de clarté, les figures 7, 8, 10, 11, 12 et 13 n'illustrent pas de module arrière 12. Toutefois, il est important de souligner que la barre omnibus 13 est étudiée de sorte à être compatible avec une mise en place alors que le ou les modules avant 11 et le ou les modules arrière 12 sont déjà installés. De même, le procédé d'assemblage de la barre omnibus, en particulier entre un module avant 11 et un module arrière 12, est compatible avec le ou les modules avant 11 et le ou les modules arrière 12 déjà installés. En effet, pour rappel l'un des objets de l'invention est de faciliter la mise en place de la connexion électrique par une barre omnibus dans un espace restreint entre deux modules par exemple.

En cas de présence de paroi 3 entre un module avant 11 et un module arrière 12 que l'on souhaite connecter entre eux par la barre 13, de préférence un trou 4 ou orifice est ménagé dans la paroi 3. Dans ce cas, la partie mâle 30 de la première partie 20 est engagée au sein du trou 4 de sorte à ce qu'elle le traverse et que la partie mâle se retrouve du côté du module arrière 12, comme illustré par une flèche sur la figure 7. Ensuite, la première partie 20 est fixée, par exemple par vissage d'une vis traversant la partie 21 et venant coopérer avec le module avant 11.

Comme illustré sur la figure 8, on procède ensuite à une étape d'engagement de la partie femelle 60 dans la partie mâle 30 par un premier mouvement de translation de la partie femelle 60 relativement à la partie mâle 30 dans le plan principal P, ou sensiblement dans le plan principal P. Plus précisément, le premier mouvement de translation est opéré selon le premier axe A1, par exemple selon la direction verticale ou sensiblement selon la direction verticale, de haut en bas. Ainsi, la deuxième partie 50 est approchée par le dessus de la batterie 10. Autrement dit, les ailes 63, 64 de la chape 62 viennent s'engager de part et d'autre de la plaque 32. Les aires de contact S30 de la plaque 32 et les aires de contact S60 de la chape 62 sont alors en contact les unes avec les autres. A noter que la faible épaisseur suivant le deuxième axe A2 de la chape 62 permet son passage entre le module arrière 12 et la caisse 2, ou entre le module arrière 12 et la séparation 3.

Comme illustré sur la figure 10, l'étape d'engagement comprend de préférence une phase d'insertion, ou fin de translation, au cours de laquelle on vient insérer, ou loger, ou guider le pion 66 de la partie femelle 60 au sein de l'encoche ou rainure 37 de la partie mâle 30. Dès lors, deux degrés de liberté sont bloqués entre la partie femelle et la partie mâle.

Comme illustré sur la figure 11, on procède ensuite à une étape de blocage ou mise en place finale ou fixation de la partie femelle 60 avec la partie mâle 30. De préférence, cette étape de blocage est assurée par rotation de la partie femelle 60 par rapport à la partie mâle 30 autour, ou sensiblement autour, du deuxième axe A2. Ce deuxième mouvement de rotation se fait dans le sens S illustré par une flèche courbe sur les figures 10 et 11. Comme évoqué précédemment, le deuxième axe A2 est perpendiculaire au plan principal P contenant l'axe longitudinal principal AP de la barre omnibus 13 en position finale connectée. Dans le mode de réalisation illustré, l'étape de blocage se termine après une rotation d'un quart de tour ou sensiblement d'un quart de tour. Les aires de contact S30 de la plaque 32 et les aires de contact S60 de la chape 62 se retrouvent alors intégralement, ou sensiblement intégralement, en contact les unes avec les autres.

Avantageusement, l'étape de blocage comprend une fin de course en rotation de la partie femelle 60. Par exemple, cette fin de course est réalisée par le contact de la partie femelle 60, par exemple un bord 65 de l'aile 63 de la chape 62, contre la butée 38 ménagée sur la partie mâle 30 du côté de la face 33 de la plaque 32. La butée 38 bloque ainsi un troisième degré de liberté, la translation suivant l'axe longitudinal principal AP.

De préférence, en particulier afin d'éviter toute interaction entre la butée 38 et la chape 62 gênant ou empêchant la translation de la partie femelle 60 au sein de l'encoche 37 et/ou la rotation de l'étape de blocage, un chanfrein 67 est prévu. Ce chanfrein 67 est ménagé sur au moins une, voire les deux ailes 63, 64, de la chape comme illustré en particulier sur les figures 6 et 10. De préférence encore, comme illustré sur les figures 5 et 6, un dégagement ou encoche 68 est ménagé au niveau de la partie maintenant les deux ailes de la chape afin d'éviter une interaction avec le contour de l'encoche 37 lors de la translation et/ou de la rotation.

A noter que la butée 38, de par son contact contre le bord 65 de l'aile 63 de la chape 62, repousse le pion 66 au sein du cran 36, en particulier au fond de ce cran et participe ainsi à un positionnement optimum de la partie femelle par rapport à la partie mâle.

Enfin, afin d'assurer la conduction électrique recherchée entre le module avant 11 et le module arrière 12, la deuxième partie 50 est fixée sur le module arrière 12, par exemple par vissage d'une vis traversant la partie 51 et venant coopérer avec le module arrière. Dès lors, tous les degrés de liberté de la partie mâle 30 par rapport à la partie femelle 60, et par conséquent de la première partie 20 par rapport à la deuxième partie 50, sont intégralement bloqués, comme illustré dans la position de connexion finale de la barre 13 sur la figure 12.

Il en résulte que la barre omnibus 13 s'étend principalement dans le plan principal P, parallèle ou sensiblement parallèle à des faces s'étendant verticalement et transversalement des modules 11, 12 et/ou de la cloison 3. L'épaisseur de la partie femelle selon le deuxième axe A2, par exemple comprise entre 2 mm et 5 mm, de préférence de l'ordre de 3 mm, permet d'agencer le module arrière 12 au plus près de la séparation 3 par exemple.

Une telle barre omnibus n'utilise que peu de place et permet de maximiser le volume des modules c'est-à-dire de maximiser la capacité de stockage d'énergie électrique au sein de la batterie 10.

Bien que la barre ait été décrite de sorte à connecter électriquement un module avant 11 avec un module arrière 12, la barre omnibus dotée du moyen de connexion 40 peut aussi permettre de connecter par exemple deux modules avant entre eux ou deux modules arrière entre eux.

En résumé, la connexion « intermodule » est assurée par le busbar 13 malgré sa forme particulière et sa longueur, en particulier du fait des positionnements de ses points de connexion sur les modules. Il peut être assemblé après montage des modules. Ce montage ou assemblage peut être assuré malgré l'espace restreint pour son insertion, en particulier entre le module arrière 12 et la caisse 2.

En outre, les aires de contact S30, S60 au niveau du moyen de connexion 40 respectent la règle précisant que l'aire de conduction électrique est au moins égale à quatre fois l'aire de section du busbar pour assurer une bonne conduction électrique.

En effet, les aires internes S60 des ailes 63, 64 de la chape 62 en contact avec les aires S30 des surfaces opposées 33, 34 respectent cette condition. De plus, aussi bien la première partie 20 que la partie mâle 30 adjacente, et aussi bien la deuxième partie 50 que la partie femelle 60 adjacente, ont une aire de section adaptée. A noter que les deux ailes 63, 64 de la chape 62 assurent des contacts plans ou sensiblement plans contre les faces opposées 33, 34 de la plaque 32 de sorte à assurer une conduction électrique optimale. De préférence, la chape 62 comprend une partie élastique entre ses deux ailes de sorte à maintenir des contacts fermes entre les ailes 63, 64 et les faces opposées 33, 34 de la plaque 32. D'ailleurs, afin de ne pas altérer cette élasticité, de préférence le pion 66 n'est fixé que sur une aile de la chape 62 de sorte à ne pas influer sur la rigidité de la chape et ne pas influer sur l'écartement de ses deux ailes. Par exemple, l'écart entre les deux ailes 63, 64 est légèrement inférieur à l'écart entre les deux faces opposées 33, 34 de sorte à générer un effort élastique assurant un maintien de la chape 62 sur la plaque 32.

Ainsi, cette barre omnibus en deux parties qui se fixent l'une avec l'autre offre une flexibilité accrue lors de l'assemblage, les modules 11, 12 pouvant être montés avant la mise en place de la barre 13. Le moyen de connexion 40 est particulièrement compact ce qui offre un gain d'espace et par conséquent la possibilité d'augmenter le volume de stockage d'énergie électrique de la batterie 10.

La connexion ou assemblage ou fixation de la partie femelle avec la partie mâle est rapide, simple et fiable.

En remarque, la solution atteint donc l'objet recherché de faciliter la connexion électrique entre deux modules d'une batterie, en particulier séparés par une cloison, et présente les avantages suivants :
- Le moyen de connexion 40 est simple à fabriquer et fait appel à des techniques de fabrication répandues (découpage, pliage, perçage), ce qui le rend particulièrement économique ;
- La chape 62 peut être obtenue par pliage ;
- La jonction entre la première partie et la deuxième partie est réalisée sans outil spécifique ,
- Les première et deuxième parties 20, 50 de la barre omnibus sont démontables, dissociables et réutilisables, rendant notamment aisé le démontage d'un module, par exemple pour le changer ou assurer sa maintenance ou sa recharge en dehors de son emplacement ;
- L'encoche 37, le pion 66 et le cran 36 assurent en même temps une fonction de détrompeur qui écarte tout montage erroné.

## Revendications

1. Moyen de connexion (40) destiné à assurer la jonction électrique entre une première partie (20) d'une barre omnibus (13) de conduction électrique et une deuxième partie (50) de ladite barre omnibus (13), **caractérisé en ce qu'**il comprend :
- une partie mâle (30) destinée à être solidarisée à la première partie (20) de la barre omnibus (13), et
- une partie femelle (60) destinée à être solidarisée à la deuxième partie (50) de la barre omnibus (13),
la partie mâle (30) et la partie femelle (60) étant aptes à s'emboîter l'une dans l'autre respectivement en suivant :
- un premier mouvement de translation de la partie femelle (60) relativement à la partie mâle (30) le long d'un premier axe (A1), suivi de ;
- un deuxième mouvement de rotation de la partie femelle (60) relativement à la partie mâle (30) autour d'un deuxième axe (A2) perpendiculaire au premier axe (A1), notamment une rotation d'un quart de tour ou sensiblement d'un quart de tour.

2. Moyen de connexion (40) selon la revendication précédente, **caractérisé en ce que** la partie mâle (30) comprend un premier élément de conduction électrique (31), notamment en forme de plaque (32) rectangulaire ou sensiblement rectangulaire,
et **en ce que** la partie femelle (60) comprend un deuxième élément de conduction électrique (61) apte à venir progressivement au contact du premier élément de conduction (31) tout au long des premier et deuxième mouvements, notamment un deuxième élément de conduction électrique (61) en forme de chape (62) dotée de deux ailes (63, 64) parallèles ou sensiblement parallèles, aptes à venir progressivement au contact de deux faces opposées (33, 34) de la plaque (32) tout au long des premier et deuxième mouvements.

3. Moyen de connexion (40) selon la revendication précédente, **caractérisé en ce que**, à l'issue des premier et deuxième mouvements, les deux faces opposées (33, 34) de la plaque (32) ont chacune une aire de contact (S30) au moins égale à quatre fois une aire de section droite d'une première partie (20) ou d'une deuxième partie (50) d'une telle barre omnibus (13),
et **en ce que** les deux ailes (63, 64) de la chape (62) ont chacune une aire de contact (S60) en contact avec l'une des deux faces opposées (33, 34) de la plaque (32), l'aire de contact (S60) étant au moins égale à quatre fois l'aire de section droite d'une première partie (20) ou d'une deuxième partie (50) d'une telle barre omnibus (13).

4. Moyen de connexion (40) selon l'une des revendications précédentes, **caractérisé en ce que** la partie mâle (30) comprend un premier élément d'immobilisation (36) de la partie femelle (60), notamment un cran,
et **en ce que** la partie femelle (60) comprend un deuxième élément d'immobilisation (66) apte à coopérer avec le premier élément d'immobilisation (36), notamment un deuxième élément d'immobilisation (66) de type pion, le pion venant se bloquer au sein du cran à l'issue des premier et deuxième mouvements.

5. Moyen de connexion (40) selon la revendication précédente, **caractérisé en ce que** la partie mâle (30) comprend un élément d'insertion (37) du deuxième élément d'immobilisation (66) de la partie femelle (60), notamment une encoche débouchant au niveau du cran.

6. Moyen de connexion (40) selon l'une des revendications précédentes, **caractérisé en ce que** la partie mâle (30) comprend un moyen de fin de course en rotation (38), notamment une butée, venant au contact de la partie femelle (60) à l'issue des premier et deuxième mouvements.

7. Barre omnibus (13) de conduction électrique entre modules (11, 12) d'une batterie (10), notamment d'une batterie (10) d'un véhicule automobile (1) hybride ou électrique, **caractérisée en ce que** la barre omnibus (13) comprend :
- une première partie (20), et
- une deuxième partie (50), et
- un moyen de connexion (40) entre la première et la deuxième partie selon l'une des revendications précédentes.

8. Batterie (10), notamment de véhicule automobile (1) hybride ou électrique, **caractérisée en ce que** la batterie (10) comprend au moins une barre omnibus (13) selon la revendication précédente.

9. Véhicule automobile (1) hybride ou électrique, **caractérisé en ce qu'**il comprend une batterie (10) selon la revendication précédente et/ou au moins une barre omnibus (13) selon la revendication 7.

10. Procédé d'assemblage d'une barre omnibus (13) selon la revendication 7, notamment pour connecter électriquement deux modules (11, 12) d'une batterie (10) entre eux, **caractérisé en ce qu'**il comprend une étape de fourniture de :
- une première partie (20) d'une barre omnibus (13) comprenant une partie mâle (30),
- une deuxième partie (50) d'une barre omnibus (13) comprenant une partie femelle (60),
suivie d'une étape d'engagement de la partie mâle (30) dans la partie femelle (60) en suivant un premier mouvement de translation de la partie femelle (60) relativement à la partie mâle (30) dans un plan principal (P) contenant l'axe longitudinal principal (AP) de la barre omnibus (13) en position finale connectée,
suivie d'une étape de blocage de la partie femelle (60) avec la partie mâle (30) en suivant un deuxième mouvement de rotation de la partie femelle (60) par rapport à la partie mâle (30) autour ou sensiblement autour d'un deuxième axe (A2) perpendiculaire au plan principal (P), notamment une rotation d'un quart de tour ou sensiblement d'un quart de tour.

11. Procédé selon la revendication précédente, **caractérisé en ce que** l'étape d'engagement comprend une phase d'insertion au cours de laquelle un deuxième élément d'immobilisation (66) de la partie femelle (60), notamment un pion, s'insère au sein d'un élément d'insertion (37) de la partie mâle (30), notamment une encoche.

12. Procédé selon l'une des revendications 10 ou 11, **caractérisé en ce que** l'étape de blocage comprend une fin de course en rotation de la partie femelle (60) contre un moyen de fin de course (38) ménagé sur la partie mâle (30), notamment une butée, de sorte à ce qu'un deuxième élément d'immobilisation (66) de la partie femelle (60) soit repoussé au sein d'un premier élément d'immobilisation (36) de la partie mâle (30), notamment un cran.

## Patentansprüche

1. Verbindungsmittel (40), welches dazu bestimmt ist, die elektrische Verbindung zwischen einem ersten Teil (20) einer Sammelschiene (13) zur elektrischen Leitung und einem zweiten Teil (50) der Sammelschiene (13) sicherzustellen, **dadurch gekennzeichnet, dass** es umfasst:
- einen Steckteil (30), der dazu bestimmt ist, mit dem ersten Teil (20) der Sammelschiene (13) fest verbunden zu werden, und
- einen Aufnahmeteil (60), der dazu bestimmt ist, mit dem zweiten Teil (50) der Sammelschiene (13) fest verbunden zu werden,
wobei der Steckteil (30) und der Aufnahmeteil (60) geeignet sind, ineinander gesteckt zu werden, indem ausgeführt werden:
- eine erste Bewegung der Translation des Aufnahmeteils (60) relativ zum Steckteil (30) entlang einer ersten Achse (A1), gefolgt von:
- einer zweiten Bewegung der Rotation des Aufnahmeteils (60) relativ zum Steckteil (30) um eine zur ersten Achse (A1) senkrechte zweite Achse (A2), insbesondere eine Rotation um eine Viertelumdrehung oder im Wesentlichen um eine Viertelumdrehung.

2. Verbindungsmittel (40) nach dem vorhergehenden Anspruch, **dadurch gekennzeichnet, dass** der Steckteil (30) ein erstes Element zur elektrischen Leitung (31) umfasst, insbesondere mit der Form einer rechteckigen oder im Wesentlichen rechteckigen Platte (32),
und dadurch, dass der Aufnahmeteil (60) ein zweites Element zur elektrischen Leitung (61) umfasst, das geeignet ist, während der gesamten ersten und zweiten Bewegung zunehmend mit dem ersten leitenden Element (31) in Kontakt zu kommen, insbesondere ein zweites Element zur elektrischen Leitung (61) mit der Form einer Kappe (62), die mit zwei parallelen oder im Wesentlichen parallelen Flanschen (63, 64) ausgestattet ist, die geeignet sind, während der gesamten ersten und zweiten Bewegung zunehmend mit zwei gegenüberliegenden Seiten (33, 34) der Platte (32) in Kontakt zu kommen.

3. Verbindungsmittel (40) nach dem vorhergehenden Anspruch, **dadurch gekennzeichnet, dass** am Ende der ersten und der zweiten Bewegung die zwei gegenüberliegenden Seiten (33, 34) der Platte (32) jeweils eine Kontaktfläche (S30) aufweisen, die mindestens gleich dem Vierfachen einer Querschnittsfläche eines ersten Teils (20) oder eines zweiten Teils (50) einer solchen Sammelschiene (13) ist,
und dadurch, dass die zwei Flansche (63, 64) der Kappe (62) jeweils eine Kontaktfläche (S60) aufweisen, die sich in Kontakt mit einer der zwei gegenüberliegenden Seiten (33, 34) der Platte (32) befindet, wobei die Kontaktfläche (S60) mindestens gleich dem Vierfachen der Querschnittsfläche eines ersten Teils (20) oder eines zweiten Teils (50) einer solchen Sammelschiene (13) ist.

4. Verbindungsmittel (40) nach einem der vorhergehenden Ansprüche, **dadurch gekennzeichnet, dass** der Steckteil (30) ein erstes Element zur Blockierung (36) des Aufnahmeteils (60) umfasst, insbesondere eine Rastkerbe,
und dadurch, dass der Aufnahmeteil (60) ein zweites Blockierelement (66) umfasst, das geeignet ist, mit dem ersten Blockierelement (36) zusammenzuwirken, insbesondere ein zweites Blockierelement (66) von der Art eines Zapfens, wobei der Zapfen am Ende der ersten und der zweiten Bewegung innerhalb der Rastkerbe blockiert wird.

5. Verbindungsmittel (40) nach dem vorhergehenden Anspruch, **dadurch gekennzeichnet, dass** der Steckteil (30) ein Element zum Einsetzen (37) des zweiten Blockierelements (66) des Aufnahmeteils (60) umfasst, insbesondere einen Einschnitt, der an der Rastkerbe mündet.

6. Verbindungsmittel (40) nach einem der vorhergehenden Ansprüche, **dadurch gekennzeichnet, dass** der Steckteil (30) ein Drehweg-Begrenzungsmittel (38) aufweist, insbesondere einen Anschlag, der am Ende der ersten und der zweiten Bewegung mit dem Aufnahmeteil (60) in Kontakt kommt.

7. Sammelschiene (13) zur elektrischen Leitung zwischen Modulen (11, 12) einer Batterie (10), insbesondere einer Batterie (10) eines hybriden oder elektrischen Kraftfahrzeugs (1), **dadurch gekennzeichnet, dass** die Sammelschiene (13) umfasst:
- einen ersten Teil (20) und
- einen zweiten Teil (50) und
- ein Verbindungsmittel (40) zwischen dem ersten und dem zweiten Teil nach einem der vorhergehenden Ansprüche.

8. Batterie (10), insbesondere eines hybriden oder elektrischen Kraftfahrzeugs (1), **dadurch gekennzeichnet, dass** die Batterie (10) mindestens eine Sammelschiene (13) nach dem vorhergehenden Anspruch umfasst.

9. Hybrides oder elektrisches Kraftfahrzeug (1), **dadurch gekennzeichnet, dass** es eine Batterie (10) nach dem vorhergehenden Anspruch und/oder mindestens eine Sammelschiene (13) nach Anspruch 7 umfasst.

10. Verfahren zum Zusammenbau einer Sammelschiene (13) nach Anspruch 7, insbesondere um zwei Module (11, 12) einer Batterie (10) elektrisch miteinander zu verbinden, **dadurch gekennzeichnet, dass** es einen Schritt der Bereitstellung umfasst:
- eines ersten Teils (20) einer Sammelschiene (13), die einen Steckteil (30) umfasst,
- eines zweiten Teils (50) einer Sammelschiene (13), die einen Aufnahmeteil (60) umfasst,
gefolgt von einem Schritt der Einführung des Steckteils (30) in den Aufnahmeteil (60), indem eine erste Bewegung der Translation des Aufnahmeteils (60) relativ zum Steckteil (30) in einer Hauptebene (P), welche die Hauptlängsachse (AP) der Sammelschiene (13) in der verbundenen Endposition enthält, ausgeführt wird, gefolgt von einem Schritt der Blockierung des Aufnahmeteils (60) mit dem Steckteil (30), indem eine zweite Bewegung der Rotation des Aufnahmeteils (60) in Bezug auf den Steckteil (30) um oder im Wesentlichen um eine zur Hauptebene (P) senkrechte zweite Achse (A2) ausgeführt wird, insbesondere eine Rotation um eine Viertelumdrehung oder im Wesentlichen um eine Viertelumdrehung.

11. Verfahren nach dem vorhergehenden Anspruch, **dadurch gekennzeichnet, dass** der Schritt der Einführung eine Phase des Einsetzens umfasst, in der ein zweites Blockierelement (66) des Aufnahmeteils (60), insbesondere ein Zapfen, ins Innere eines Einsetzelements (37) des Steckteils (30), insbesondere eines Einschnitts, eingesetzt wird.

12. Verfahren nach einem der Ansprüche 10 oder 11, **dadurch gekennzeichnet, dass** der Schritt der Blockierung eine Begrenzung des Drehweges des Aufnahmeteils (60) an einem am Steckteil (30) ausgebildeten Wegbegrenzungsmittel (38), insbesondere einem Anschlag, umfasst, und zwar derart, dass ein zweites Blockierelement (66) des Aufnahmeteils (60) ins Innere eines ersten Blockierelements (36) des Steckteils (30), insbesondere einer Rastkerbe, gedrückt wird.

## Claims

1. Connecting means (40) designed to provide the electrical junction between a first part (20) of an electrical conduction bus bar (13) and a second part (50) of said bus bar (13), **characterized in that** it comprises:
- a male part (30) designed to be rigidly attached to the first part (20) of the bus bar (13), and
- a female part (60) designed to be rigidly attached to the second part (50) of the bus bar (13), the male part (30) and the female part (60) being designed to fit into one another respectively following:
- a first translational movement of the female part (60) relative to the male part (30) along a first axis (A1), followed by;
- a second rotational movement of the female part (60) relative to the male part (30) about a second axis (A2) perpendicular to the first axis (A1), notably a rotation of a quarter of a turn or substantially of a quarter of a turn.

2. Connecting means (40) according to the preceding claim, **characterized in that** the male part (30) comprises a first electrical conduction element (31), notably in the form of a rectangular or substantially rectangular plate (32),
and **in that** the female part (60) comprises a second electrical conduction element (61) designed to progressively come into contact with the first conduction element (31) throughout the first and second movements, notably a second electrical conduction element (61) in the form of a yoke (62) having two parallel or substantially parallel wings (63, 64), designed to come progressively into contact with two opposing faces (33, 34) of the plate (32) throughout the first and second movements.

3. Connecting means (40) according to the preceding claim, **characterized in that**, following the first and second movements, the two opposing faces (33, 34) of the plate (32) each have a contact area (S30) equal to at least four times a right cross-sectional area of a first part (20) or of a second part (50) of such a bus bar (13),
and **in that** the two wings (63, 64) of the yoke (62) each have a contact area (S60) in contact with one of the two opposing faces (33, 34) of the plate (32), the contact area (S60) being equal to at least four times the right cross-sectional area of a first part (20) or of a second part (50) of such a bus bar (13).

4. Connecting means (40) according to one of the preceding claims, **characterized in that** the male part (30) comprises a first immobilizing element (36) for the female part (60), notably a slot,
and **in that** the female part (60) comprises a second immobilizing element (66) designed to cooperate with the first immobilizing element (36), notably a second immobilizing element (66) of the pin type, the pin getting blocked within the slot after the first and second movements.

5. Connecting means (40) according to the preceding claim, **characterized in that** the male part (30) comprises an element (37) for insertion of the second immobilizing element (66) of the female part (60), notably a notch coming out at the slot.

6. Connecting means (40) according to one of the preceding claims, **characterized in that** the male part (30) comprises a means for end of travel in rotation (38), notably an end stop, coming into contact with the female part (60) following the first and second movements.

7. Bus bar (13) for electrical conduction between modules (11, 12) of a battery (10), notably of a battery (10) of a hybrid automobile or electric vehicle (1), **characterized in that** the bus bar (13) comprises:
- a first part (20), and
- a second part (50), and
- a connecting means (40) between the first and the second part according to one of the preceding claims.

8. Battery (10), notably for a hybrid automobile or electric vehicle (1), **characterized in that** the battery (10) comprises at least one bus bar (13) according to the preceding claim.

9. Hybrid automobile or electric vehicle (1), **characterized in that** it comprises a battery (10) according to the preceding claim and/or at least one bus bar (13) according to Claim 7.

10. Method for assembling a bus bar (13) according to Claim 7, notably for electrically connecting two modules (11, 12) of a battery (10) together, **characterized in that** it comprises a step for supplying:
- a first part (20) of a bus bar (13) comprising a male part (30),
- a second part (50) of a bus bar (13) comprising a female part (60),
followed by a step for engaging the male part (30) into the female part (60) by following a first translational movement of the female part (60) relative to the male part (30) in a main plane (P) containing the main longitudinal axis (AP) of the bus bar (13) in the final connected position,
followed by a step for blocking the female part (60) with the male part (30) by following a second rotational movement of the female part (60) with respect to the male part (30) about or substantially about a second axis (A2) perpendicular to the main plane (P), notably a rotation of a quarter of a turn or substantially of a quarter of a turn.

11. Method according to the preceding claim, **characterized in that** the engagement step comprises an insertion phase during which a second immobilizing element (66) of the female part (60), notably a pin, is inserted into an insertion element (37) of the male part (30), notably a notch.

12. Method according to either of Claims 10 and 11, **characterized in that** the blocking step comprises an end of travel in rotation of the female part (60) against an end of travel means (38) arranged on the male part (30), notably an end stop, such that a second immobilizing element (66) of the female part (60) is pushed back into a first immobilizing element (36) of the male part (30), notably a slot.
